# EUROPÄISCHE PATENTANMELDUNG

(11) **EP 2 065 453 A1**
(43) Veröffentlichungstag der Anmeldung: **03.06.2009**
(21) Anmeldenummer: 07122022.2
(22) Anmeldetag: 30.11.2007
(51) Int. Cl.: C09J 5/02, C09J 7/02

(54) **Folienprimer mit verbesserter Haftung**

(71) Anmelder: Sika Technology AG, 6340 Baar (CH)
(72) Erfinder: Buchholz, André, 27721, Ritterhude (DE); Demmig, Martin, 25451 Quickborn (DE)
(74) Vertreter: Sika Patent Attorneys

(57) **Zusammenfassung**

Die vorliegende Erfindung betrifft die Verwendung einer Primerzusammensetzung umfassend eine Verbindung der Formel (I) sowie ein Polymer P, welches mindestens eine nucleophile funktionelle Gruppe pro Molekül aufweist, für das Verkleben von Kunststofffolien.

Die Verwendung derartiger Primerzusammensetzungen eignet sich insbesondere für das Kaschieren von Form- und Bauteilen, insbesondere durch Vakuumtiefziehen, und weist den Vorteil auf, dass es, durch verbesserte Haftung und Dehnbarkeit des Primers auf der Kunststofffolie, in der Primerschicht zu keiner Rissbildung kommt, welche Abzeichnungen auf der Folienoberseite hinterlässt.

## Beschreibung

### Technisches Gebiet

Die Erfindung betrifft das Gebiet der Primer für das Verkleben von Kunststofffolien.

### Stand der Technik

In der Verklebung von Kunststofffolien, insbesondere beim so genannten Kaschieren, werden Primer als Haftvermittler zwischen Folie und Klebstoff eingesetzt. Neben der Verbesserung der Haftung, dient die Primerschicht einerseits auch als Weichmachersperre zwischen Kunststofffolie und Klebstoff und andererseits soll sie das Verblocken der Vorder- und der Rückseite der Kunststofffolie in der Folienrolle verhindern. Dabei sind sowohl auf Lösungsmittel als auch auf Wasser basierende Systeme bekannt.
Der wesentliche Nachteil der bekannten, insbesondere der auf Wasser basierenden Systeme, ist, dass die Haftung und die Dehnbarkeit der Primerschicht auf der Kunststofffolie oft ungenügend ist. Insbesondere bei Anwendungen, wo die Folie mit einem Primer vorbeschichtet wird und zum Kaschieren von Form- bzw. Bauteilen, beispielsweise durch Vakuumtiefziehen, eingesetzt wird, führt diese ungenügende Haftung vielfach zu einer deutlichen Rissbildung in der Primerschicht. An den Stellen, an denen der Primer einreisst, bzw. sich von der Folie löst, setzen sich die Risse in der Kunststofffolie, in besonderem Masse in Schaumfolien, fort. Zwar entstehen diese Risse an der Rückseite der Folie, sie sind aber auch an der Sichtseite der Folie als Abzeichnungen wahrzunehmen, was eine optische Beeinträchtigung darstellt.

### Darstellung der Erfindung

Die Aufgabe der vorliegenden Erfindung ist es daher, eine Primerzusammensetzung für das Verkleben von Kunststofffolien zur Verfügung zu stellen, welche die Nachteile des Stands der Technik überwindet und eine verbesserte Haftung und Dehnbarkeit auf Kunststofffolien aufweist.

Überraschenderweise wurde gefunden, dass Primerzusammensetzungen gemäss Anspruch 1 diese Aufgabe lösen. Der Einsatz von Verbindungen der Formel (I) in Primerzusammensetzungen für das Verkleben von Kunststofffolien führt zu einer verbesserten Haftung und zu einer höheren Dehnbarkeit des Primers auf der Kunststofffolie, wodurch bei deren Verkleben die Rissbildung in der Primerschicht verhindert wird. Dadurch werden, beispielsweise beim Kaschieren von Form- und Bauteilen, Abzeichnungen verhindert, die das optische Erscheinungsbild des kaschierten Teils beeinträchtigen.
Weiterhin weisen erfindungsgemässe Primerzusammensetzungen den Vorteil auf, dass sie auf einer Kunststofffolie appliziert werden können und beim Aufrollen der Folie für die Lagerung, zu einem geringeren Verblocken der Folienvorder- und der Rückseite in der Folienrolle führen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft die Verwendung einer Primerzusammensetzung Z umfassend mindestens
a) eine Verbindung der Formel (I) 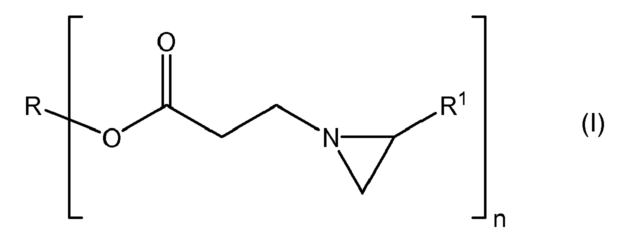 wobei der Rest R für einen n-wertigen aliphatischen Kohlenwasserstoffrest mit 2 bis 15 C-Atomen steht, welcher gegebenenfalls Heteroatome aufweist; der Rest R¹ für ein Wasserstoffatom oder für eine Methylgruppe steht und n für einen Wert von 2 bis 4 steht; sowie
b) mindestens ein Polymer P, welches mindestens eine nucleophile funktionelle Gruppe aufweist; als Primer für das Beschichten und Verkleben von Kunststofffolien.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen wie beispielsweise Additionen oder Substitutionen von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Als "Kunststofffolie" werden insbesondere biegsame flächige Kunststoffe in einer Dicke von 0.05 bis 5 mm verstanden, die sich aufrollen lassen. Somit werden neben "Folien" im strengen Sinn von Dicken unter 1 mm, auch Abdichtungsbahnen, wie sie typischerweise zum Abdichten von Tunnels, Dächern oder Schwimmbädern in einer Dicke von typischerweise 1 bis 3 mm, in Spezialfällen sogar in einer Dicke bis maximal 5 mm, verwendet werden, verstanden. Derartige Kunststofffolien werden üblicherweise durch Streichen, Giessen, Kalandrieren oder Extrusion hergestellt und sind typischerweise in Rollen kommerziell erhältlich oder werden vor Ort hergestellt. Sie können einschichtig oder mehrschichtig aufgebaut sein.
Der Begriff "Primer" ist dem Fachmann bestens bekannt und bezeichnet im vorliegenden Dokument eine dünne Schicht, von typischerweise dünner als 1 mm, insbesondere zwischen 1 und 200 µm, bevorzugt zwischen 1 und 100 µm, welche auf die Oberfläche eines Substrats appliziert wird und gegebenenfalls nach dem Ablüften mit einem Klebstoff kontaktiert wird, wobei sie zu einer Verbesserung der Haftung des Klebstoffs auf dem Substrat führen. Unter "Ablüften" wird im gesamten Dokument ein Abtrocknen einer Primerzusammensetzung nach der Applikation derselben verstanden, wobei das Lösungsmittel oder das Dispersionsmittel ganz oder zumindest hauptsächlich, verdunstet.
Unter "flüchtigen organischen Verbindungen", auch VOC ("Volatile Organic Compounds") genannt, werden im vorliegenden Dokument organische Verbindungen verstanden, welche einen Siedepunkt von kleiner als 250°C bei Normdruck oder einen Dampfdruck von grösser als 0.1 mbar bei 20°C besitzen.
Als "Raumtemperatur" wird eine Temperatur von 23 °C bezeichnet.

In der Verbindung der Formel (I) steht der Rest R vorzugsweise für einen veresterten oder teilveresterten Rest eines Polyols, welches insbesondere ausgewählt ist aus der Gruppe bestehend aus Glycerin, 1,1,1-Trimethylolethan, Pentaerythrit, 1,1,1-Trimethylolpropan und Di(trimethylolpropan).

Steht der Rest R für einen vollständig veresterten Rest eines Polyols, entspricht er insbesondere einem Rest, welcher ausgewählt aus der Gruppe bestehend aus

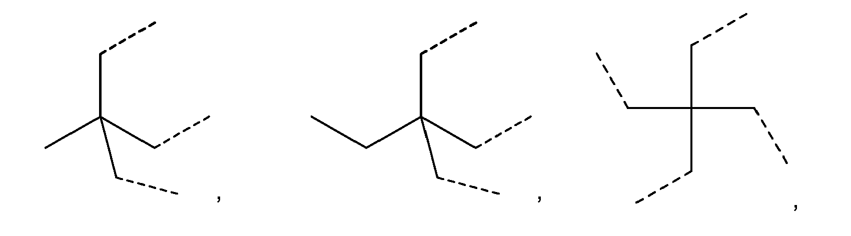

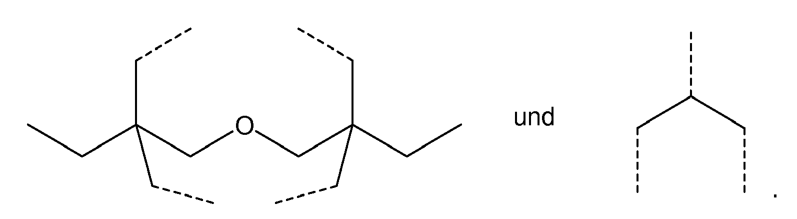

Die gestrichelten Linien in den Formeln dieses Dokuments stellen jeweils die Bindung zwischen dem jeweiligen Substituenten und dem dazugehörigen Molekülrest dar

Bevorzugt steht n für den Wert 3 und der Rest R steht für einen Rest der Formel (II) oder der Formel (III).

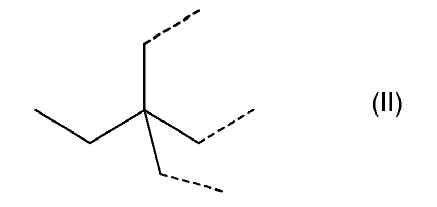

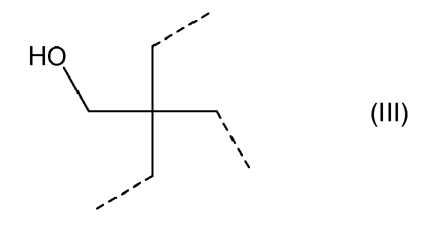

Besonders bevorzugte Verbindungen der Formel (I) sind ausgewählt aus der Gruppe bestehend aus Trimethylolpropan-tris-((2-methyl)aziridin-1-yl)-propionat, Trimethylolpropan-tris-3-(aziridin-1-yl)propionat und Pentaerythritol-tris-3-(aziridin-1-yl)propionat. Derartige Verbindungen der Formel (I) sind beispielsweise unter den Handelsnamen XAMA^{®} 2, XAMA^{®} 7 und XAMA^{®} 220 kommerziell erhältlich von der Firma Bayer MaterialScience LLC, USA, oder unter dem Handelsnamen Chemitite^{®} PZ von der Firma Nippon Shokubai Co., LTD, Japan.

Verbindungen der Formel (I) lassen sich beispielsweise herstellen aus einer Umesterung von Methyl-3-(2-methylaziridin-1-yl)propionat bzw. Methyl-3-(aziridin-1-yl)propionat mit einem Polyol der Formel (IV) unter Verwendung von Katalysatoren, insbesondere tertiären Aminen, Titan(IV)- oder Zinn(IV)-Verbindungen.

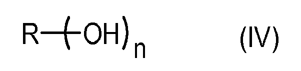

Beispielsweise lassen sich Verbindungen der Formel (I) auch herstellen durch Michael-Addition von 2-Methylaziridin bzw. Aziridin an eine Verbindung der Formel (V).

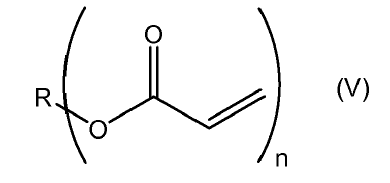

Der Rest R und der Wert n in den Verbindungen der Formel (IV) und (V) sind bereits vorhergehend beschrieben worden.

Der Anteil der Verbindung der Formel (I) beträgt vorzugsweise 0.1 bis 3 Gew.-%, insbesondere 0.2 bis 2 Gew.-%, bevorzugt 0.3 bis 0.7 Gew.-%, bezogen auf das Gesamtgewicht der Primerzusammensetzung **Z.**

Das Polymer **P** weist mindestens eine nucleophile funktionelle Gruppe auf, welche insbesondere ausgewählt ist aus der Gruppe bestehend aus Hydroxylgruppe, Carboxylgruppe, Sulfonatgruppe und Phosphatgruppe.

Vorzugsweise ist das Polymer **P** ein Polyurethan **PUR,** insbesondere ein Polyester-Polyurethan, oder ein Poly(meth)acrylat **PAC.**

Polyurethane **PUR,** welche mindestens eine nucleophile Gruppe aufweisen, sind insbesondere herstellbar aus mindestens einem Polyisocyanat und mindestens einem Polyol sowie mindestens einem Monomer **M1,** welches wenigstens eine Isocyanatgruppe oder eine gegenüber Isocyanatgruppen reaktive Gruppe und darüber hinaus mindestens eine nucleophile funktionelle Gruppe aufweist.

Als Polyisocyanate können handelsübliche aliphatische, cycloaliphatische oder aromatische Polyisocyanate, insbesondere Diisocyanate, verwendet werden.
Als Polyole eignen sich insbesondere Polyester- oder Polyetherpolyole, bevorzugt Polyester- oder Polyetherdiole. Weiterhin eignen sich als Polyole niedrigmolekulare zwei- oder mehrwertige Alkohole wie beispielsweise 1,2-Ethandiol, 1,3- und 1,4-Butandiol, 1,2- und 1,3-Propandiol, Neopentylglykol, Diethylenglykol, Triethylenglykol, die isomeren Dipropylenglykole und Tripropylenglykole, die isomeren Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten.
Geeignete Monomere **M1** weisen vorzugsweise mindestens eine Carboxylgruppe und/oder eine Sulfonatgruppe auf. Vorzugsweise handelt es sich beim Monomer **M1** um eine Aminocarbonsäure, eine Hydroxycarbonsäure, insbesondere eine Dihydroxyalkylcarbonsäure, wie beispielsweise Dimethylolpropionsäure oder eine dazu strukturähnliche Diolcarbonsäure, oder um eine NCO-reaktive Gruppen aufweisende Sulfonsäure wie beispielsweise eine Dihydroxysulfonsäure. Bevorzugt ist das Monomer **M1,** welches eine Sulfonatgruppe aufweist, das Natriumsalz der N-(2-Aminoethyl)-2-aminoethansulphonsäure.

Es hat sich gezeigt, dass besonders geeignete Polyurethane solche sind, wie sie beispielsweise als "Polymer (PII)" in DE 100 00 656 A1 oder WO 01/34559 A1, oder als "Polyurethan" in DE 195 21 500 A1 beschrieben sind.

Poly(meth)acrylate **PAC,** welche mindestens eine nucleophile Gruppe aufweisen, sind insbesondere herstellbar aus mindestens einem (Meth)acrylatmonomer sowie mindestens einem Monomer **M2,** welches mit dem (Meth)acrylatmonomer polymerisierbar ist und darüber hinaus mindestens eine nucleophile funktionelle Gruppe aufweist. Beispielsweise sind derartige Poly(meth)acrylate Co-Polymere aus mindestens einem (Meth)acrylatmonomer, welches insbesondere ausgewählt ist aus der Gruppe bestehend aus Methyl(meth)acrylat, Butyl(meth)acrylat, Ethylhexyl(meth)acrylat, Ethylenglycoldi(meth)acrylat, Tetrahydrofurfuryl(meth)acrylat, Isobornyl(meth)acrylat und Butandioldi(meth)acrylat; und mindestens einer ungesättigten Carbonsäure, insbesondere (Meth)acrylsäure, Maleinsäure, Fumarsäure, Crotonsäure oder dergleichen, einem (Meth)acrylamid oder einem (Meth)acrylsäureester, welcher eine Hydroxylgruppe aufweist, insbesondere Hydroxyalkyl(meth)acrylat wie Hydroxybutylacrylat (HBA), Hydroxybutylmethacrylat (HBMA), Hydroxypropylacrylat (HPA), Hydroxypropylmethacrylat (HPMA), Hydroxyethylacrylat (HEA) oder Hydroxyethylmethacrylat (HEMA), oder ein Teilester eines Polyols, bevorzugt Glycerin oder Trimethylolpropan, mit (Meth)acrylsäure.

Die Primerzusammensetzung **Z** ist vorzugsweise eine wässrige Polymerdispersion, wobei das Polymer **P** als Feststoff vorliegt und der Anteil des Polymers **P** vorzugsweise 15 bis 55 Gew.-%, insbesondere 25 bis 50 Gew.-%, bevorzugt 35 bis 45 Gew.-%, bezogen auf das Gesamtgewicht der Primerzusammensetzung **Z,** beträgt.

Die wässrige Polymerdispersion ist dabei insbesondere eine Mischung aus einer wässrigen Polyurethandispersion, umfassend mindestens ein Polyurethan **PUR,** und einer wässrigen Poly(meth)acrylatdispersion, umfassend mindestens ein Poly(meth)acrylat **PAC,** wie sie jeweils vorhergehend beschrieben worden sind.
Der Anteil der wässrigen Polyurethandispersion beträgt vorzugsweise 10 bis 50 Gew.-%, insbesondere 20 bis 40 Gew.-%, bevorzugt 33 bis 36 Gew.-%, bezogen auf das Gesamtgewicht der Primerzusammensetzung **Z.** Dabei beträgt der Feststoffgehalt der wässrigen Polyurethandispersion, also der Anteil des Polyurethans **PUR,** 35 bis 55 Gew.-%, insbesondere 40 bis 50 Gew.-%, bevorzugt 44 bis 56 Gew.-%, bezogen auf das Gesamtgewicht der wässrigen Polyurethandispersion.

Der Anteil der wässrigen Poly(meth)acrylatdispersion beträgt vorzugsweise 40 bis 80 Gew.-%, insbesondere 50 bis 70 Gew.-%, bevorzugt 60 bis 66 Gew.-%, bezogen auf das Gesamtgewicht der Primerzusammensetzung **Z.** Der Feststoffgehalt der wässrigen Poly(meth)acrylatdispersion, also der Anteil des Poly(meth)acrylats **PAC,** beträgt dabei 30 bis 50 Gew.-%, insbesondere 35 bis 40 Gew.-%, bevorzugt 37 bis 38 Gew.-%, bezogen auf das Gesamtgewicht der wässrigen Poly(meth)acrylatdispersion.

Vorzugsweise handelt es sich bei der Primerzusammensetzung **Z** um eine zweikomponentige Zusammensetzung, wobei die zwei Komponenten **A** und **B,** bis zur Applikation getrennt voneinander aufbewahrt und erst kurz davor miteinander vermischt werden. Typischerweise beinhaltet die erste Komponente **A** mindestens ein Polymer **P** und die zweite Komponente **B** mindestens eine Verbindung der Formel (I).

Weiterhin kann die Primerzusammensetzung **Z** zusätzlich weitere Bestandteile umfassen. Diese sind insbesondere ausgewählt aus der Gruppe bestehend aus Stabilisatoren, Emulgatoren, Verdickungsmittel, Lösungsmittel, Rheologieadditive, Konservierungsmittel, Alterungsschutzmittel, Biozide, Fungizide, Pigmente, Farbstoffe, Netzmittel, Entschäumer, Mattierungsmittel, Neutralisationsmittel und Füllstoffe.
Dabei ist dem Fachmann selbstverständlich klar, dass die weiteren Bestandteile innerhalb einer Komponente der Primerzusammensetzung so gewählt sein müssen, dass sie nicht miteinander in einer Art und Weise reagieren, durch welche die Lagerstabilität dieser Komponente beeinträchtigt wird.

Handelt es sich bei der Primerzusammensetzung **Z** um eine wässrige Polymerdispersion, sind grundsätzlich solche Stabilisatoren, wie sie bei wässrigen Dispersionen üblicherweise verwendet werden, geeignet. Es hat sich jedoch gezeigt, dass die Verwendung von Netzmittel, Cellulose, Polyvinylalkohol, Polyvinylpyrrolidon sowie Mischungen davon die Lagerstabilität von Polymerdispersionen deutlich verbessert.

Weiterhin weist die Primerzusammensetzung **Z** vorzugsweise weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Primerzusammensetzung **Z,** an organischen Verbindungen auf, welche einen Siedepunkt von kleiner als 250°C bei Normdruck oder einen Dampfdruck von grösser als 0.1 mbar bei 20°C besitzen, so genannten VOCs. Dies ist insbesondere aus ökologischer, gesundheitlicher und sicherheitstechnischer Sicht sehr vorteilhaft.

Insbesondere umfasst die Erfindung die Verwendung einer Primerzusammensetzung **Z** wie sie vorhergehend beschrieben worden ist als Primer für Dispersionsklebstoffe.
Bevorzugt eignet sich die Verwendung einer vorhergehend beschriebenen Primerzusammensetzung **Z** als Primer für das Beschichten und das Verkleben von Kunststofffolien, wobei diese aufgebaut sind aus einem thermoplastischen Kunststoff, wie Polyvinylchlorid (PVC), insbesondere Weich-PVC, Ethylen/Vinylacetat-Copolymer (EVA), oder Thermoplastische Polyolefine (TPO), Acrylonitril/Styrol/Acrylsäureester-Copolymer (ASA), Polyurethan (PUR), Polyamid (PA), Poly(meth)acrylate, Polycarbonate, Polyethylenterephtalat (PET) oder deren Kunststofflegierungen.
Als besonders bevorzugt gelten PVC-Folien, insbesondere PVC-Schaumfolien.

Meist bevorzugt eignet sich die Primerzusammensetzung **Z** für Kunststofffolien, welche für das Kaschieren von Form- und Bauteilen, insbesondere durch Vakuumtiefziehen, verwendet werden.

Die Applikation der Primerzusammensetzung **Z** kann mittels Tuch, Filz, Rolle, Schwamm, Pinsel, Rakel, Sprühen, Streichen, Walzen, Giessen, Stempeln, Tauchbeschichten oder dergleichen erfolgen und kann sowohl manuell als auch mittels Roboter erfolgen.

In einem weiteren Aspekt umfasst die Erfindung ein Verfahren des Verklebens zweier Substrate **S1** und **S2** umfassend die Schritte
i) Applizieren einer Primerzusammensetzung **Z** gemäss vorhergehender Beschreibung auf ein zu verklebendes Substrat **S1;**
ii) Applizieren eines Klebstoffes auf die Primerzusammensetzung **Z,** welche sich auf dem Substrat **S1** befindet;
iii) Kontaktieren des Klebstoffes mit einem zweiten Substrat **S2;** oder
i') Applizieren einer Primerzusammensetzung **Z** gemäss vorhergehender Beschreibung auf ein zu verklebendes Substrat **S1;**
ii') Applizieren eines Klebstoffes auf ein Substrat **S2;**
iii') Kontaktieren des Klebstoffes mit der Primerzusammensetzung **Z,** welche sich auf dem Substrat **S1** befindet; oder
i") Applizieren einer Primerzusammensetzung **Z** gemäss vorhergehender Beschreibung auf ein zu verklebendes Substrat **S1;**
ii") Applizieren eines Klebstoffes auf die Primerzusammensetzung **Z,** welche sich auf dem Substrat **S1** befindet;
ii") Applizieren eines Klebstoffes auf ein Substrat **S2;**
iii") Kontaktieren des Klebstoffes auf der Primerzusammensetzung **Z,** welche sich auf dem Substrat **S1** befindet, mit dem Klebstoff, welcher sich auf dem Substrat **S2** befindet.

Dabei ist mindestens eines der Substrate **S1** oder **S2** eine Kunststofffolie, wie sie vorhergehend beschrieben worden ist.

Nach dem Applizieren der Primerzusammensetzung **Z** und vor dem Applizieren des Klebstoffs kann gegebenenfalls das Ablüften der Primerzusammensetzung **Z** unter Bildung einer abgelüfteten Primerzusammensetzung und/oder einer zumindest teilweise vernetzten Primerzusammensetzung stattfinden.

Weiterhin betrifft die Erfindung auch ein Verfahren zur Herstellung einer mit einer Primerzusammensetzung **Z** beschichteten Kunststofffolie umfassend die Schritte
i"') Applizieren einer Primerzusammensetzung **Z** gemäss vorhergehender Beschreibung auf eine Kunststofffolie;
ii"') Ablüften der Primerzusammensetzung **Z** unter Bildung einer abgelüfteten Primerzusammensetzung und/oder einer zumindest teilweise vernetzten Primerzusammensetzung.

Das Ablüften kann durch Abdunsten an Luft mit oder ohne Ablüftemittel erfolgen. Als Ablüftemittel kann beispielsweise ein Gebläse, insbesondere ein Luftgebläse, dienen. Bevorzugt wird ein Ablüftemittel eingesetzt. Das Ablüften kann bei Raumtemperatur oder bei erhöhter Temperatur erfolgen, insbesondere bei einer Temperatur unter 150°C. Vorzugsweise erfolgt das Ablüften bei niedriger Temperatur.

Somit umfasst die Erfindung auch eine Kunststofffolie, wie sie vorhergehend beschreiben worden ist, welche mit einer ebenfalls vorhergehend beschriebenen Primerzusammensetzung **Z** und/oder mit einer abgelüfteten Primerzusammensetzung und/oder mit einer zumindest teilweise vernetzten Primerzusammensetzung beschichtet ist.

Die derart hergestellte, mit einer Primerzusammensetzung **Z** beschichtete Kunststofffolie kann nun je nach Bedarf abgelängt, abgeschnitten, aufgerollt oder direkt weiterverarbeitet werden. Die Rollen mit den beschichteten Kunststofffolien können je nach Bedarf gelagert oder transportiert werden. Es ist ein wesentlicher Vorteil der beschriebenen mit einer Primerzusammensetzung **Z** beschichteten Kunststofffolie, dass sie ohne die Verwendung von Trennpapier-Zwischenlagen aufgerollt werden kann, da kein Blocken der aufgerollten Folie auch nach längeren Lager- oder Transportzeiten auftritt. Es ist dem Fachmann klar, dass es unter gewissen Bedingungen trotzdem von Vorteil sein kann, Zwischenlagen eines Trennpapiers zu verwenden. Die Kunststofffolie kann so beispielsweise beim Folienhersteller beschichtet und über längere Zeit gelagert werden und bei Bedarf an das Werk geliefert werden, welches dann diese vorbeschichtete Folie mit einem Träger verklebt. Trotz dieser langen Zeitspanne zwischen Beschichtung und Verarbeitung kann ein tadelloser Klebverbund gewährleistet werden. Dieser Vorteil ist insbesondere deshalb wichtig, weil in der Industrie, insbesondere in der Fahrzeugherstellung die Tendenz der Fertigung "weg vom Band hin zum Zulieferer" zu beobachten ist. Dieser Trend setzt sich seinerseits auch zwischen dem direkten Zulieferer, beispielsweise von Autotüren, und dessen Zulieferer, beispielsweise von Dekormateralien, fort.

In einem weiteren Aspekt umfasst die Erfindung auch die Verwendung einer mit einer Primerzusammensetzung **Z** beschichteten Kunststofffolie, wie sie vorhergehend beschrieben worden ist, zur Kaschierung von Bauteilen für Fahrzeuginnenräume, insbesondere Instrumententafeln, Türseitenverkleidungen, Mittelkonsolen, Sitzverkleidungen und dergleichen.

Dabei wird die Kunststofffolie typischerweise durch Vakuumtiefziehen oder durch Presskaschieren auf der Substrat aufgebracht.

Beim Vakuumtiefziehen wird die mit einer Primerzusammensetzung beschichtete Kunststofffolie, insbesondere eine Dekorfolie aus einem luftundurchlässigen Material, in einem Rahmen luftdicht eingespannt und erhitzt. In diesem Zustand wird die Folie über ein unterwärts ebenfalls luftdichtes Gehäuse gefügt in dem bzw. auf dem sich die zu kaschierende Form oder das zu kaschierende Bauteil befindet. Diese Form bzw. dieses Bauteil ist mit einem Klebstoff, insbesondere einem Dispersionsklebstoff, welcher gegebenenfalls abgelüftet ist, beschichtet. Beim Absaugen der Luft aus dieser Vorrichtung schmiegt sich nun die Kunststofffolie unter dem auf seine Oberfläche lastenden atmosphärischen Druck passgenau auf das darunter liegende Bauteil.

Beim Presskaschieren wird eine mit einer Primerzusammensetzung beschichtete Kunststofffolie, welche jedoch im Gegensatz zum Vakuumtiefziehen nicht zwingend luftundurchlässig sein muss, sondern auch aus einem offenporigen Material, beispielsweise aus einem PVC-Schaum, bestehen kann, unter Fügen und Pressen mit der zu kaschierenden Form bzw. dem zu kaschierenden Bauteil verklebt. Beim Presskaschieren wird der Klebstoff ebenfalls auf die Form bzw. das Bauteil und gegebenenfalls auch auf die Kunststofffolie aufgetragen.

### Beispiele

### Herstellung der Primerzusammensetzung

Als Komponente **A'** der Primerzusammensetzung diente sowohl für das erfindungsgemässe Beispiel **1** als auch für das Vergleichsbeispiel **2** eine Zusammensetzung umfassend eine wässrige Polyurethandispersion **DPUR,** eine wässrige Poly(meth)acrylatdispersion **DPAC** sowie ein Rheologieadditiv (Borchi^{®} Gel L 75 N, kommerziell erhältlich von der Firma Borchers GmbH, Deutschland) in den in Tabelle 1 angegebenen Gewichtsanteilen miteinander vermischt.
Als wässrige Polyurethandispersion **DPUR** diente eine wässrige, anionische Polyester-Polyurethandispersion mit einem Feststoffgehalt von ca. 45 Gew.-%, einem pH-Wert von ca. 7, einer Viskosität bei Raumtemperatur von 50 bis 180 mPa·s (gemessen nach DIN EN ISO 3219, Schergeschwindigkeit 250 s⁻¹) und einer Dichte von ca. 1,06 g/cm³.
Als wässrige Poly(meth)acrylatdispersion **DPAC** diente eine wässrige, anionische Poly(meth)acrylatdispersion mit einem Feststoffgehalt von ca. 37 Gew.-%, einem pH-Wert von ca. 10, einer Viskosität bei Raumtemperatur von ca. 30 mPa·s (gemessen nach DIN EN ISO 3219, Schergeschwindigkeit 250 s⁻¹) und einer Dichte von ca. 1,03 g/cm³.

Als Komponente **B'** wurde für das Vergleichsbeispiel **2** ein wasseremulgierbares Isocyanat (Desmodur^{®} DN, kommerziell erhältlich von der Firma Bayer MaterialScience, Deutschland) eingesetzt. Für das erfindungsgemässe Beispiel **1** wurde als Komponente **B'** Trimethylolpropan-tris-3-(1-aziridinopropionat) eingesetzt.
Vor der Verwendung wurden die jeweiligen Komponenten **A'** und **B'** gemäss der in Tabelle 1 angegebenen Gewichtsanteilen miteinander vermischt.

### Beschreibung der Messmethoden

### Prüfung auf Rissbildung: Zugversuch

Die jeweilige Primerzusammensetzung wurde mittels einer Rakel in einer Schichtdicke von 60 µm auf eine PVC-Schaumfolie aufgetragen. Die Filme wurden eine Minute bei einer Temperatur von 120 °C in einem Ofen getrocknet und dann während 24 Stunden bei Raumtemperatur gelagert. Danach wurde die Folie in Streifen geschnitten und einem Zugversuch bei 130 °C, einer Zuggeschwindigkeit von 50 mm/min und einer Maximaldehnung von 100% unterzogen. Beurteilt wurde nach dem Zugversuch die Rissbildung auf der Folienseite, welche mit der Primerzusammensetzung beschichtet wurde. Die Rissbildung in der Primerschicht wurde visuell beurteilt.

### Prüfung auf Rissbildung: Tiefziehversuch

In einem ersten Versuch zur Bestimmung der Rissbildung in der Primerschicht beim Tiefzeihen wurde je eine mit einer Primerzusammensetzung gemäss Beispiel **1** und **2** (Vergleich) beschichtete Kunststofffolie auf eine Temperatur von 150 °C erwärmt und anschliessend über die obere, grosse Öffnung eines Trichters gelegt. An der unteren Öffnung, also am Hals, des Trichters wurde ein Vakuum angelegt, worauf die Kunststofffolie tiefgezogen wurde. Die Rissbildung in der Primerschicht wurde visuell beurteilt.

In einem zweiten Tiefziehversuch wurden je eine mit einer Primerzusammensetzung gemäss Beispiel **1** und **2** (Vergleich) beschichtete Kunststofffolie auf eine Temperatur von 150 °C erwärmt und über einen mit einem Dispersionsklebstoff beschichteten Acrylnitril/Butadien/Styrol-Prüfkörper tiefgezogen. Die Rissbildung wurde anhand der Abzeichnungen auf der Folienoberseite visuell beurteilt.

### Prüfung auf Blockfestigkeit des Primers

Es wurden gemäss dem vorhergehend beschriebenen Verfahren Teststreifen der Abmessung 5x10 cm hergestellt und so aufeinander gelegt, dass je Vorder- und Rückseite der Folie zu einander in Kontakt waren. Die Proben wurden mit einer 2,5 kg schweren Masse beschwert und in diesem Zustand während 24 Stunden im Trockenschrank bei einer Temperatur von 80 °C gelagert. Nach dem Abkühlen der Proben auf Raumtemperatur wurde die in einem T-Schälversuch (180°-Schälversuch) bei Raumtemperatur und einer Zuggeschwindigkeit von 200 mm/min die Trennkraft bzw. die Schälkraft der Folien gemessen.

**Tabelle 1 Primerzusammensetzungen und Resultate der Versuche**

| | Inhaltsstoffe [Gew.-%] | **1** | **2 (Vergleich)** |
|---|---|---|---|
| Komponente **A'** | Polyurethandispersion **DPUR** | 34 | 34 |
| | Poly(meth)acrylat dispersion **DPAC** | 63 | 63 |
| | Rheologieadditiv | 3 | 3 |
| Komponente **B'** | Desmodur^{®} DN | 5 | |
| | Trimethylolpropantris-3-(1-aziridinopropionat) | | 0.5 |
| Visuelle Beurteilung der Rissbildung nach Zugund Tiefziehversuchen | | Starke Rissbildung; teilweise Abzeichnungen auf der Folienoberseite, teilweise Ablösung des Primers. | Keine Rissbildung; homogene Folienunter- und Oberseite, keine Ablösung des Primers. |
| Blockfestigkeit (Trennkraft in [N/5 cm]) | Foliendicke 1.2 mm | 0.32 | 0.41 |
| | Foliendicke 3.2 mm | 1.23 | 1.16 |

## Patentansprüche

1. Verwendung einer Primerzusammensetzung **Z** umfassend mindestens
a) eine Verbindung der Formel (I) 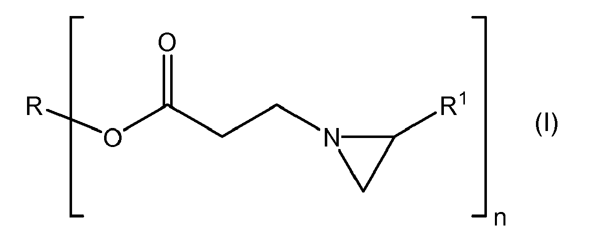 wobei der Rest R für einen n-wertigen aliphatischen Kohlenwasserstoffrest mit 2 bis 15 C-Atomen steht, welcher gegebenenfalls Heteroatome aufweist; der Rest R¹ für ein Wasserstoffatom oder für eine Methylgruppe steht; und n für einen Wert von 2 bis 4 steht; sowie
b) mindestens ein Polymer **P,** welches mindestens eine nucleophile funktionelle Gruppe aufweist; als Primer für das Beschichten und Verkleben von Kunststofffolien.

2. Verwendung gemäss Anspruch 1, **dadurch gekennzeichnet, dass** der Rest R für einen veresterten oder teilveresterten Rest eines Polyols steht, welches insbesondere ausgewählt ist aus der Gruppe bestehend aus Glycerin, 1,1,1-Trimethylolethan, Pentaerythrit, 1,1,1-Trimethylolpropan und Di(trimethylolpropan).

3. Verwendung gemäss einem der vorhergehenden Ansprüche, **dadurch gekennzeichnet, dass** die Verbindung der Formel (I) ausgewählt ist aus der Gruppe bestehend aus Trimethylolpropan-tris-(1-(2-methyl)aziridino)-propionat, Trimethylolpropan-tris-3-(1-aziridinopropionat) und Pentaerythritol-tris-3-(1-aziridinopropionat).

4. Verwendung gemäss einem der vorhergehenden Ansprüche, **dadurch gekennzeichnet, dass** der Anteil der Verbindung der Formel (I) 0.1 bis 3 Gew.-%, insbesondere 0.2 bis 2 Gew.-%, bevorzugt 0.3 bis 0.7 Gew.-%, bezogen auf das Gesamtgewicht der Primerzusammensetzung **Z,** beträgt.

5. Verwendung gemäss einem der vorhergehenden Ansprüche, **dadurch gekennzeichnet, dass** das Polymer **P** mindestens eine nucleophile funktionelle Gruppe aufweist, welche ausgewählt ist aus der Gruppe bestehend aus Hydroxylgruppe, Carboxylgruppe, Sulfonatgruppe und Phosphatgruppe.

6. Verwendung gemäss einem der vorhergehenden Ansprüche, **dadurch gekennzeichnet, dass** das Polymer **P** ein Polyurethan, insbesondere ein Polyester-Polyurethan, oder ein Poly(meth)acrylat ist.

7. Verwendung gemäss einem der vorhergehenden Ansprüche, **dadurch gekennzeichnet, dass** die Primerzusammensetzung **Z** eine wässrige Polymerdispersion ist, wobei das Polymer **P** als Feststoff vorliegt.

8. Verwendung gemäss Anspruch 7, **dadurch gekennzeichnet, dass** der Anteil des Polymers **P** 15 bis 55 Gew.-%, insbesondere 25 bis 50 Gew.-%, bevorzugt 35 bis 45 Gew.-%, bezogen auf das Gesamtgewicht der Primerzusammensetzung **Z,** beträgt.

9. Verwendung gemäss einem der Ansprüche 7 oder 8, **dadurch gekennzeichnet, dass** die wässrige Polymerdispersion eine Mischung aus einer wässrigen Polyurethandispersion und einer wässrigen Poly(meth)-acrylatdispersion umfasst.

10. Verwendung gemäss Anspruch 9, **dadurch gekennzeichnet, dass** der Anteil der wässrigen Polyurethandispersion 10 bis 50 Gew.-%, insbesondere 20 bis 40 Gew.-%, bevorzugt 33 bis 36 Gew.-%, und der Anteil der wässrigen Poly(meth)acrylatdispersion 40 bis 80 Gew.-%, insbesondere 50 bis 70 Gew.-%, bevorzugt 60 bis 66 Gew.-%, jeweils bezogen auf das Gesamtgewicht der Primerzusammensetzung **Z,** beträgt.

11. Verwendung gemäss einem der Ansprüche 9 oder 10, **dadurch gekennzeichnet, dass** der Feststoffgehalt der wässrigen Polyurethandispersion 35 bis 55 Gew.-%, insbesondere 40 bis 50 Gew.-%, bevorzugt 44 bis 56 Gew.-%, bezogen auf das Gesamtgewicht der wässrigen Polyurethandispersion, beträgt.

12. Verwendung gemäss einem der Ansprüche 9 bis 11, **dadurch gekennzeichnet, dass** der Feststoffgehalt der wässrigen Poly(meth)-acrylatdispersion 30 bis 50 Gew.-%, insbesondere 35 bis 40 Gew.-%, bevorzugt 37 bis 38 Gew.-%, bezogen auf das Gesamtgewicht der wässrigen Poly(meth)acrylatdispersion, beträgt.

13. Verwendung gemäss einem der vorhergehenden Ansprüche, **dadurch gekennzeichnet, dass** die Primerzusammensetzung **Z** zweikomponentig ist, wobei die erste Komponente **A** mindestens ein Polymer **P** enthält; und die zweite Komponente **B** mindestens eine Verbindung der Formel (I) enthält.

14. Verwendung gemäss einem der vorhergehenden Ansprüche, **dadurch gekennzeichnet, dass** die Primerzusammensetzung **Z** zusätzlich mindestens ein Rheologieadditiv aufweist

15. Verwendung gemäss einem der vorhergehenden Ansprüche, **dadurch gekennzeichnet, dass** die Primerzusammensetzung **Z** weniger als 5 Gew.-%, insbesondere 0 bis 2 Gew.-%, bevorzugt 0 bis 1 Gew.-%, meist bevorzugt 0 Gew.-%, jeweils bezogen auf das Gesamtgewicht der Primerzusammensetzung **Z,** an organischen Verbindungen aufweist, welche einen Siedepunkt von kleiner als 250°C bei Normdruck oder einen Dampfdruck von grösser als 0.1 mbar bei 20°C besitzen.

16. Verwendung gemäss einem der vorhergehenden Ansprüche, **dadurch gekennzeichnet, dass** die Kunststofffolie aufgebaut ist aus einem thermoplastischen Kunststoff, wie Polyvinylchlorid (PVC), insbesondere Weich-PVC, Ethylen/Vinylacetat-Copolymer (EVA), oder Thermoplastische Polyolefine (TPO), Acrylonitril/Styrol/Acrylsäureester-Copolymer (ASA), Polyurethan (PUR), Polyamid (PA), Poly(meth)acrylate, Polycarbonate, Polyethylenterephtalat (PET) oder deren Kunststofflegierungen.

17. Verwendung gemäss einem der vorhergehenden Ansprüche, **dadurch gekennzeichnet, dass** die Kunststofffolie eine PVC-Folie, insbesondere eine PVC-Schaumfolie, ist.

18. Verfahren des Verklebens zweier Substrate **S1** und **S2** umfassend die Schritte
i) Applizieren einer Primerzusammensetzung **Z,** wie sie in einer Verwendung gemäss einem der Ansprüche 1 bis 17 beschrieben ist, auf ein zu verklebendes Substrat **S1;**
ii) Applizieren eines Klebstoffes auf die Primerzusammensetzung **Z,** welche sich auf dem Substrat **S1** befindet;
iii) Kontaktieren des Klebstoffes mit einem zweiten Substrat **S2;** oder
i') Applizieren einer Primerzusammensetzung **Z,** wie sie in einer Verwendung gemäss einem der Ansprüche 1 bis 17 beschrieben ist, auf ein zu verklebendes Substrat **S1;**
ii') Applizieren eines Klebstoffes auf ein Substrat **S2;**
iii') Kontaktieren des Klebstoffes mit der Primerzusammensetzung **Z,** welche sich auf dem Substrat **S1** befindet; oder
i") Applizieren einer Primerzusammensetzung **Z,** wie sie in einer Verwendung gemäss einem der Ansprüche 1 bis 17 beschrieben ist, auf ein zu verklebendes Substrat **S1;**
ii") Applizieren eines Klebstoffes auf die Primerzusammensetzung **Z,** welche sich auf dem Substrat **S1** befindet;
ii") Applizieren eines Klebstoffes auf ein Substrat **S2;**
iii") Kontaktieren des Klebstoffes auf der Primerzusammensetzung **Z,** welche sich auf dem Substrat **S1** befindet, mit dem Klebstoff, welcher sich auf dem Substrat **S2** befindet;
wobei mindestens eines der Substrate **S1** oder **S2** eine Kunststofffolie ist.

19. Verfahren gemäss Anspruch 18, **dadurch gekennzeichnet, dass** nach dem Applizieren der Primerzusammensetzung **Z** und vor dem Applizieren des Klebstoffs das Ablüften der Primerzusammensetzung **Z** unter Bildung einer abgelüfteten Primerzusammensetzung und/oder einer zumindest teilweise vernetzten Primerzusammensetzung stattfindet.

20. Verfahren gemäss einem der Ansprüche 18 oder 19, **dadurch gekennzeichnet, dass** mindestens eines der Substrate **S1** oder **S2** eine Kunststofffolie ist, welche aufgebaut ist aus einem thermoplastischen Kunststoff, wie Polyvinylchlorid (PVC), insbesondere Weich-PVC, Ethylen/Vinylacetat-Copolymer (EVA), oder Thermoplastische Polyolefine (TPO), Acrylonitril/Styrol/Acrylsäureester-Copolymer (ASA), Polyurethan (PUR), Polyamid (PA), Poly(meth)acrylate, Polycarbonate, Polyethylenterephtalat (PET) oder deren Kunststofflegierungen.

21. Verfahren gemäss einem der Ansprüche 18 bis 20, **dadurch gekennzeichnet, dass** die Kunststofffolie eine PVC-Folie, insbesondere eine PVC-Schaumfolie, ist.

22. Verfahren zur Herstellung einer mit einer Primerzusammensetzung **Z** beschichteten Kunststofffolie umfassend die Schritte
i"') Applizieren einer Primerzusammensetzung **Z,** wie sie in einer Verwendung gemäss einem der Ansprüche 1 bis 17 beschrieben ist, auf eine Kunststofffolie;
ii"') Ablüften der Primerzusammensetzung **Z** unter Bildung einer abgelüfteten Primerzusammensetzung und/oder einer zumindest teilweise vernetzten Primerzusammensetzung.

23. Kunststofffolie, welche nach einem Verfahren gemäss Anspruch 22 hergestellt wird.

24. Kunststofffolie gemäss Anspruch 23, **dadurch gekennzeichnet, dass** die Kunststofffolie aufgebaut ist aus einem thermoplastischen Kunststoff, wie Polyvinylchlorid (PVC), insbesondere Weich-PVC, Ethylen/Vinylacetat-Copolymer (EVA), oder Thermoplastische Polyolefine (TPO), Acrylonitril/Styrol/Acrylsäureester-Copolymer (ASA), Polyurethan (PUR), Polyamid (PA), Poly(meth)acrylate, Polycarbonate, Polyethylenterephtalat (PET) oder deren Kunststofflegierungen.

25. Kunststofffolie gemäss Anspruch 23, **dadurch gekennzeichnet, dass** die Kunststofffolie eine PVC-Folie, insbesondere eine PVC-Schaumfolie, ist.

26. Verwendung einer Kunststofffolie gemäss einem der Ansprüche 23 bis 25 zur Kaschierung von Bauteilen für Fahrzeuginnenräume, insbesondere Instrumententafeln, Türseitenverkleidungen, Mittelkonsolen, Sitzverkleidungen und dergleichen.
